# EUROPEAN PATENT APPLICATION

(11) **EP 3 598 741 A1**
(43) Date of publication of application: **22.01.2020**
(21) Application number: 18766948.6
(22) Date of filing: 13.02.2018
(51) Int. Cl.: H04N 5/445

(54) **METHOD AND APPARATUS FOR PROMPTING INFORMATION**

(30) Priority: 14.03.2017 CN 201710149521
(71) Applicant: Shenzhen Skyworth-RGB Electronic Co., Ltd., Shenzhen, Guangdong 518052 (CN)
(72) Inventor: GAO, Pengcheng, Shenzhen Guangdong 518052 (CN)
(74) Representative: Viering, Jentschura & Partner mbB Patent- und Rechtsanwälte
(86) International application number: PCT/CN2018/076622
(87) International publication number: WO 2018/166321

(57) **Abstract**

A method and apparatus for prompting information. The method for prompting information, which is applied to an intelligent device, comprises: acquiring weather information about a destination within a pre-set time period; parsing the weather information to obtain a parsing result of the weather information; and controlling, according to the parsing result, a display component arranged on an intelligent device so same carries out display according to a first display rule.

## Description

### TECHNICAL FIELD

The present disclosure relates to the field of electronic technologies, for example, a method and apparatus for prompting information.

### BACKGROUND

Home devices increasingly tend to be networked and smart.

For example, networked smart televisions have been widely popularized. Compared with non-smart televisions, smart televisions are more and more popular with a wide range of users because of their intelligence and a better sense of experience. However, smart televisions in the existing art still have the following disadvantages.

For example, when a smart television fails or a remote-controller fails, the television does not respond at all even if a user may continuously press the remote-controller after turning on the television, and the user is generally not sure whether remote control signals cannot be correctly sent due to the failure of the remote-controller or remote control signals cannot be normally received due to the failure of the television. At this point, the user cannot determine whether the remote-controller fails or the television fails. As a result, the user may blindly replace the remote-controller or replace the battery in the remote-controller, wasting the user's time and money.

As another example, generally a smart television can be connected to the Internet so that weather information can be viewed in real time. When a user wants to view the weather condition, usually the user first turns on the television and then views related weather information on the corresponding application (APP). The operation of acquiring information is complex and time-consuming, resulting in a poor user experience.

### SUMMARY

The present disclosure provides a method and apparatus for prompting information that can conveniently and quickly indicate weather information to a user.

Embodiments of the present disclosure adopt solutions described below.

According to a first aspect, the present disclosure provides a method for prompting information applied to a smart device. The method includes:
acquiring weather information of a destination within a preset period;
parsing the weather information to obtain a parsing result of the weather information; and
controlling, according to the parsing result, a display component on the smart device to perform displaying according to a first display rule.

According to a second aspect, the present disclosure further provides an apparatus for prompting information applied to a smart device. The apparatus includes:
a weather information acquisition module, which is configured to acquire weather information of a destination within a preset period;
a weather information parsing module, which is configured to parse the weather information to obtain a parsing result of the weather information; and
a first control module, which is configured to control, according to the parsing result, a display component on the smart device to perform displaying according to a first display rule.

The present disclosure further provides a computer-readable storage medium storing computer-executable instructions for executing the preceding method.

The present disclosure further provides a device for prompting information. The device for prompting information includes one or more processors, a memory, and one or more programs. The one or more programs are stored in the memory. When the one or more programs are executed by the one or more processors, the preceding method is executed.

The present disclosure further provides a computer program product. The computer program product includes one or more computer programs stored on a non-transient computer-readable storage medium. The one or more computer programs include program instructions. When executed by a computer, the program instructions enable the computer to execute any method described above.

In the solution provided in the present disclosure, weather information of a destination within a preset period is acquired and stored, the weather information is parsed, and a display component on a smart device is controlled according to a parsing result to perform displaying according to a first display rule. When the display component on the smart device performs displaying according to the first display rule on the basis of the parsing result of the weather information, the user can determine the current weather information of the destination just according to the content of the first display rule and the display mode of the display component without using the method like turning on the smart device or making a query on the Internet. The solution provides a convenient and quick method for the user to learn the weather information, bringing a better user experience.

### BRIEF DESCRIPTION OF DRAWINGS

FIG. 1 is a flowchart of a method for prompting information according to embodiment one.
FIG. 2A is a flowchart of a method for prompting information according to embodiment two.
FIG. 2B is a flowchart of an optional implementation of step 230 of FIG. 2A.
FIG. 2C is a flowchart of an optional implementation of step 230 of FIG. 2A.
FIG. 3 is a structure diagram of an apparatus for prompting information according to embodiment three.
FIG. 4 is a structure diagram of an apparatus for prompting information according to embodiment four.
FIG. 5 is a structure diagram of hardware of a device for prompting information according to embodiment five.

### DETAILED DESCRIPTION

### Embodiment one

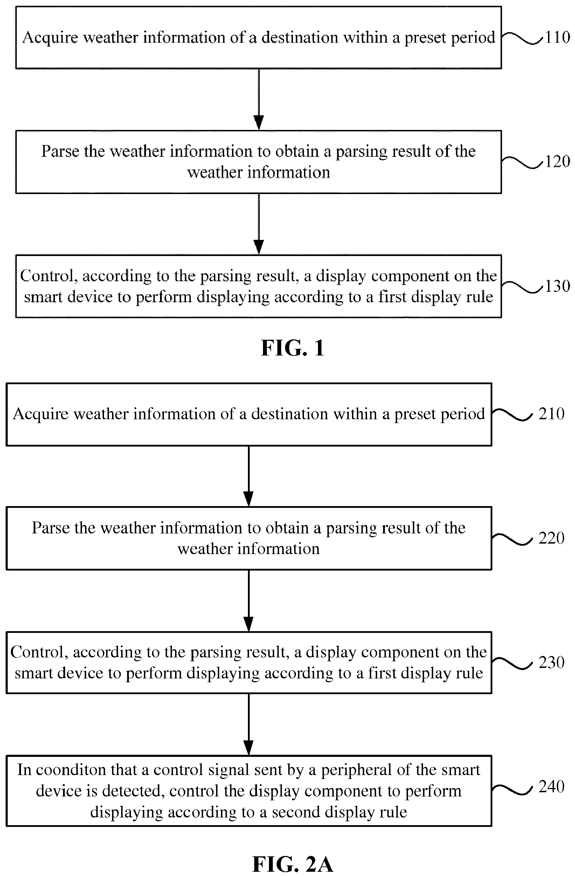

Referring to FIG. 1, FIG. 1 is a flowchart of a method for prompting information according to embodiment one. The method in this embodiment may be executed by a display component provided on a smart device such as a smart television, a smart door frame, a smart shoe cabinet or a smart tea table, and may be executed by a microprocessor that controls the operation of the display component. The method is applicable to an application scenario where weather information needs to be indicated to a user at any time.

As shown in FIG. 1, the method for prompting information provided in this embodiment may include the steps described below.

In step 110, weather information of a destination within a preset period is acquired.

By way of example, the preset period may be three days, one week, half a month, or the like. In this embodiment, the preset period is optionally three days to ensure that the user can still be provided with relatively accurate weather information when weather data is not updated for several days. The destination may be the location of the user or may be a destination set according to the actual requirements of the user. For example, if the user resides in Shenzhen, but the child of the user goes to school in Beijing, and the user is more interested in the weather information of Beijing, then Beijing may be set as the destination according to the requirements. The weather information may include at least one of weather condition information and weather level information. Generally, the weather condition information may include a clear day, a rainy day, and the like, and the weather level information may include a heavy rain, a light rain, a wind scale, and the like.

The weather information can be acquired in a plurality of ways. For example, if the smart device is a smart television, the weather information of the destination within the preset period can be downloaded from a server when the smart television is turned on and connected to the Internet. Alternatively, the user may download the weather information of the destination within the preset period in advance and then load the weather information via a U disk, a data line, or the like. Each time new weather information is acquired, the weather information stored last time is automatically cleared to ensure that the latest weather information is provided to the user as far as possible.

In step 120, the weather information is parsed so that a parsing result of the weather information is obtained.

By way of example, parsing the weather information refers to analyzing the content information of at least one of the weather condition information and the weather level information in the weather information and converting the obtained content information into microprocessor-readable signal.

In step 130, a display component on the smart device is controlled according to the parsing result to perform displaying according to a first display rule.

By way of example, the parsing result refers to the signal obtained from the analysis in step 120, the smart device may be optionally a smart television, and the display component may be optionally a logo on the smart television. The Logo may be composed of light-emitting diode (LED) lamps. The display component is controlled by a microprocessor independent of the system of the smart television. The content of the first display rule is well known to the user. That is, the user can learn the current weather information of the destination according to the display mode in which the logo displays and emits light according to the first display mode.

By way of example, the smart device is a smart television and the display component is a logo composed of LED lamps. The microprocessor controlling the operating state of the display component may be independent of the system of the smart television. The operating state of the microprocessor is not associated with whether the smart television is operating. The acquired weather information may be stored in a memory connected to the microprocessor. The microprocessor fetches the weather information in the memory, parses the weather information to obtain the corresponding analytical signal, uses the Pulse Width Modulation (PWM) technology to convert the analytic signal obtained from the parsing into a circuit control signal, and controls, through the circuit control signal and a control circuit, the LED lamps in the logo region to display and emit light according to the first display rule. The user learns the current weather information of the destination just according to the light state of the LED lamps in the logo region.

In conclusion, in this solution, the microprocessor controlling the display component acquires and stores the weather information of the destination within the preset period in advance by way of online downloading, user loading, or the like, parses the weather information, and controls, according to the parsing result, the display component on the smart device, to perform displaying according to a first display rule. When the display component on the smart device performs displaying according to the first display rule on the basis of the parsing result of the weather information, the user can determine the current weather information of the destination just according to the content of the first display rule and the display mode of the display component without using the method like turning on the smart device or making a query on the Internet. The solution provides a convenient and quick method for the user to learn the weather information, bringing a better user experience.

### Embodiment two

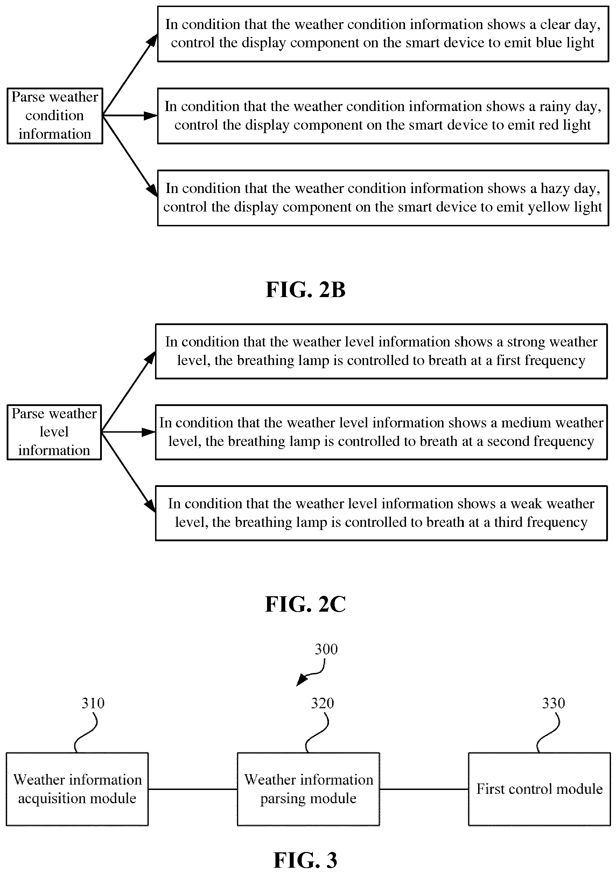

Referring to FIGS. 2A, 2B and 2C, FIG. 2A is a flowchart of a method for prompting information according to embodiment two, FIG. 2B is a flowchart of an optional implementation of step 230 of FIG. 2A, and FIG. 2C is a flowchart of an optional implementation of step 230 of FIG. 2A. This embodiment is different from embodiment one in that, on the basis of embodiment one, the step of when detecting a control signal sent by a peripheral of the smart device, controlling the display component to perform displaying according to a second display rule is added to this embodiment, and this embodiment provides two optional implementations of step 230 of FIG. 2A.

As shown in FIG. 2A, the method for prompting information provided in this embodiment may include the steps described below.

In step 210, weather information of a destination within a preset period is acquired.

In step 220, the weather information is parsed so that a parsing result of the weather information is obtained.

In step 230, a display component on the smart device is controlled according to the parsing result to perform displaying according to a first display rule.

By way of example, a signal obtained from the parsing varies with the content contained in the weather information, so a microprocessor needs to control the light-emitting display state of a logo on a smart television according to the obtained signal and the first display rule.

In one embodiment of the present application, when the weather information includes weather condition information, as shown in FIG. 2B, step 230 may include:
in condition that the weather condition information shows a clear day, controlling the display component on the smart device to emit first color light; or
in condition that the weather condition information shows a rainy day, controlling the display component on the smart device to emit second color light; or
in condition that the weather condition information shows a hazy day, controlling the display component on the smart device to emit third color light.

Optionally, the first color light is blue light, the second color light is red light, and the third color light is yellow light.

The weather condition information may also show a cloudy day, a dust storm, or the like. The display component may be controlled to emit light of a corresponding color to indicate such weather condition information. Details are not enumerated here.

In another embodiment of the present application, when the weather information further includes weather level information, step 230 may include: controlling, according to the weather level information, the display component on the smart device to perform displaying in a display mode of a breathing lamp.

In condition that the weather level information shows a strong weather level, the breathing lamp is controlled to breath at a first frequency.

In condition that the weather level information shows a medium weather level, the breathing lamp is controlled to breath at a second frequency.

In condition that the weather level information shows a weak weather level, the breathing lamp is controlled to breath at a third frequency.

The first frequency, the second frequency and the third frequency are different from each other. Optionally, in this embodiment, the first frequency is greater than the second frequency, and the second frequency is greater than the third frequency.

This embodiment provides only one mode of classifying weather levels. Other modes of classifying weather levels may be used in other embodiments. Other modes of classifying weather levels include, for example, a mode of classifying weather into two levels: heavy rain and light rain, or a mode of classifying weather into multiple levels: wind scale one, wind scale two, ..., wind scale 10, ....

It is to be understood that the weather information may include both the weather condition information and the weather level information. For example, when the current weather information shows a moderate haze, the LED lamps of the logo take the form of a breathing lamp breathing at a second frequency and emit yellow light; when the current weather information shows a heavy rain, the LED lamps of the logo take the form of a breathing lamp breathing at a first frequency and emit red light.

In step 240, when a control signal sent by a peripheral of the smart device is detected, the display component is controlled to perform displaying according to a second display rule.

By way of example, the second display rule is different from the first display rule in that a user knows about the content of the second display rule in advance, that is, the user can learn, according to the display mode in which the display component displays and emits light according to the second display rule, whether or not the control signal sent by the peripheral is received. For example, if the smart device is a smart television, the peripheral may be an infrared remote-controller used in conjunction with the smart television, and the user generally makes the infrared remote-controller send a control signal to remotely control the smart television. When a fault occurs in the infrared remote-controller or in the smart television and the user is unable to remotely control the smart television through the infrared remote-controller, it is difficult for the user to determine whether the infrared remote-controller fails or the smart television fails. As result, the user may blindly replace the infrared remote-controller or replace the battery in the infrared remote-controller, wasting the user's time, money and energy.

Optionally, the operation of controlling the display component to perform displaying according to the second display rule in step 240 may include:
controlling the display component to perform displaying in a display mode of a horse racing lamp for a first preset duration; and
after the display component performs displaying in the display mode of the horse racing lamp for the first preset duration, controlling the display component to perform displaying according to a third display rule, where the third display rule is different from the first display rule and the second display rule.

In this embodiment, the first preset duration may be optionally three seconds, and the content of the third display rule is also known to the user in advance.

Optionally, controlling the display component to perform displaying according to the third display rule includes: controlling the display component to perform displaying according to the third display rule for a second preset duration.

Optionally, within the second preset duration in which the display component is controlled to perform displaying according to the third display rule, if no control signal sent by the peripheral of the smart device is detected, the operation of controlling the display component on the smart device to perform displaying according to the first display rule in step 230 is performed. The second preset duration may be optionally five seconds.

In this embodiment, the microprocessor for controlling the LED lamps of the logo is connected to an infrared sensor, and the control signal sent by the infrared remote-controller can be detected by the infrared sensor. When the microprocessor detects the control signal sent by the infrared remote-controller, the LED lamps of the logo are controlled to perform displaying in the display mode of the horse racing lamp for three seconds. Therefore, when the user presses a button on the infrared remote-controller, but the smart television is not remotely controlled, whether the smart television receives the control signal can be determined just according to the display state of the LED lamps of the logo. If the LED lamps of the logo perform displaying in the form of the horse racing lamp, then that the smart television receives the control signal indicates that the infrared remote-controller is normal and the smart television is faulty. If the state of the LED lamps of the logo is unchanged and the LED lamps of the logo do not perform displaying in the form of the horse racing lamp, then that the smart television does not receive the control signal indicates that the infrared remote-controller is faulty. For example, the LED lamps of the logo may be controlled to perform displaying in the display mode of the horse racing lamp for three seconds and then the LED lamps of the logo may be controlled to normally emit white light for two seconds, indicating that the LED lamps are in the standby state. If no new control signal sent by the infrared remote-controller is detected within the five seconds, the LED lamps of the logo are controlled to continue to perform displaying in the form of the breathing lamp. If new control signal sent by the infrared remote-controller is detected within the five seconds, the LED lamps of the logo are controlled to continue to perform displaying in the form of the horse racing lamp.

In conclusion, in this solution, the microprocessor controlling the display component acquires and stores the weather information of the destination within the preset period in advance by way of online downloading, user loading, or the like, parses the weather information, and controls, according to the parsing result, the display component on the smart device, to perform displaying according to a first display rule. When the control signal sent by the peripheral of the smart device is detected, the display component is controlled to perform displaying according to the second display rule. When the display component on the smart device performs displaying according to the first display rule on the basis of the parsing result of the weather information, the user can determine the current weather information of the destination just according to the content of the first display rule and the display mode of the display component without using the method like turning on the smart device or making a query on the Internet. The solution provides a convenient and quick method for the user to learn the weather information, bringing a better user experience. Meanwhile, when the control signal sent by the peripheral of the smart device is detected, the display component is controlled to perform displaying according to the second display rule, so that when the smart television cannot be controlled by the infrared remote-controller, the user can accurately determine whether the smart television is faulty or the infrared remote-controller is faulty.

The following are embodiments of apparatuses for prompting information according to embodiments of the present application. The apparatuses for prompting information and the preceding methods for prompting information are guided by the same inventive concept. For what is not detailed in embodiments on the apparatus for prompting information, see the preceding method for prompting information embodiments.

### Example three

Referring to FIG. 3, FIG. 3 is a structure diagram of an apparatus for prompting information according to embodiment three.

The apparatus for prompting information 300 provided in this embodiment may be disposed on a smart device and disposed in a microprocessor that controls the operation of a display component on the smart device. The apparatus for prompting information 300 may include:
a weather information acquisition module 310, which is configured to acquire weather information of a destination within a preset period;
a weather information parsing module 320, which is configured to parse the weather information to obtain a parsing result of the weather information; and
a first control module 330, which is configured to control, according to the parsing result, a display component on the smart device to perform displaying according to a first display rule.

In conclusion, in this solution, the microprocessor controlling the display component acquires and stores the weather information of the destination within the preset period in advance by way of online downloading, user loading, or the like, parses the weather information, and controls, according to the parsing result, the display component on the smart device, to perform displaying according to a first display rule. When the display component on the smart device performs displaying according to the first display rule on the basis of the parsing result of the weather information, the user can determine the current weather information of the destination just according to the content of the first display rule and the display mode of the display component without using the method like turning on the smart device or making a query on the Internet. The solution provides a convenient and quick method for the user to learn the weather information, bringing a better user experience.

### Embodiment four

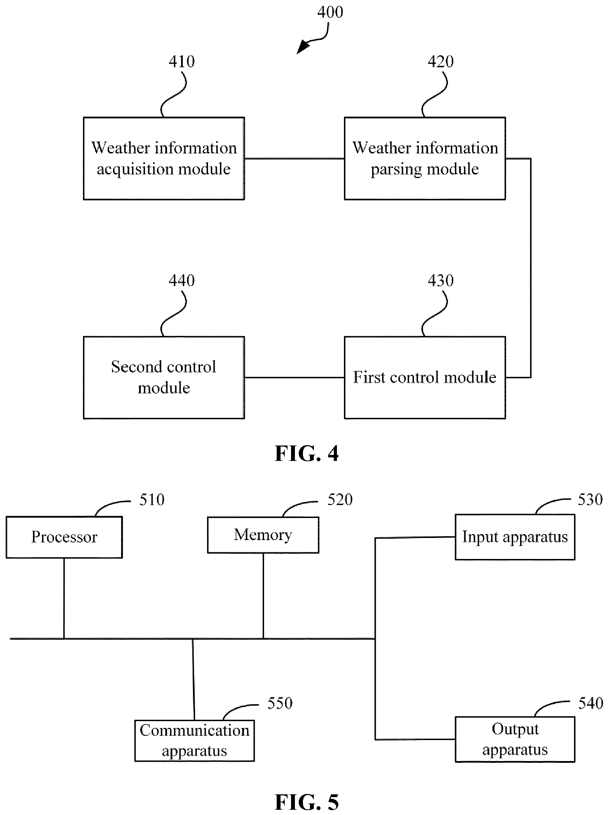

Referring to FIG. 4, FIG. 4 is a structure diagram of an apparatus for prompting information according to embodiment four. This embodiment is different from embodiment three in that a second control module 440 is added in embodiment four on the basis of embodiment three, and two optional implementations of a first control module 430 of FIG. 4 are provided in embodiment four.

The apparatus for prompting information 400 provided in this embodiment may include:
a weather information acquisition module 410, which is configured to acquire weather information of a destination within a preset period;
a weather information parsing module 420, which is configured to parse the weather information to obtain a parsing result of the weather information;
a first control module 430, which is configured to control, according to the parsing result, a display component on the smart device to perform displaying according to a first display rule; and
a second control module 440, which is configured to, when a control signal sent by a peripheral of the smart device is detected, control the display component to perform displaying according to a second display rule, where the second display rule is different from the first display rule.

Optionally, the second control module 440 is configured to: control the display component to perform displaying in a display mode of a horse racing lamp for a first preset duration; and after the display component performs displaying in the display mode of the horse racing lamp for the first preset duration, control the display component to perform displaying according to a third display rule, where the third display rule is different from the first display rule and the second display rule.

Optionally, the second control module 440 is further configured to: trigger the first control module if no control signal sent by the peripheral of the smart device is detected within the second preset duration during which the display component is controlled to perform displaying according to the third display rule.

Optionally, the weather information includes weather condition information.

The first control module 430 is configured to perform at least one of the following steps: when the weather condition information shows a clear day, control the display component on the smart device to emit blue light; or when the weather condition information shows a rainy day, control the display component on the smart device to emit red light; or when the weather condition information shows a hazy day, control the display component on the smart device to emit yellow light.

Optionally, the weather information further includes weather level information.

The first control module 430 is configured to: control, according to the weather level information, the display component on the smart device to perform displaying in a display mode of a breathing lamp, where when the weather level information shows a strong weather level, the breathing lamp is controlled to breath at a first frequency; when the weather level information shows a medium weather level, the breathing lamp is controlled to breath at a second frequency; and when the weather level information shows a weak weather level, the breathing lamp is controlled to breath at a third frequency, where the first frequency, the second frequency and the third frequency are different from each other.

Optionally, the display component is a logo composed of light-emitting diode (LED) lamps.

In conclusion, in this solution, the microprocessor controlling the display component acquires and stores the weather information of the destination within the preset period in advance by way of online downloading, user loading, or the like, parses the weather information, and controls, according to the parsing result, the display component on the smart device, to perform displaying according to a first display rule. When the control signal sent by the peripheral of the smart device is detected, the display component is controlled to perform displaying according to the second display rule. When the display component on the smart device performs displaying according to the first display rule on the basis of the parsing result of the weather information, the user can determine the current weather information of the destination just according to the content of the first display rule and the display mode of the display component without using the method like turning on the smart device or making a query on the Internet. The solution provides a convenient and quick method for the user to learn the weather information, bringing a better user experience. Meanwhile, when the control signal sent by the peripheral of the smart device is detected, the display component is controlled to perform displaying according to the second display rule, so that when the smart television cannot be controlled by the infrared remote-controller, the user can accurately determine whether the smart television is faulty or the infrared remote-controller is faulty.

This embodiment further provides a computer-readable storage medium storing computer-executable instructions for executing any one of the preceding methods.

FIG. 5 is a structure diagram of hardware of a device for prompting information according to embodiment five. As shown in FIG. 5, the device for prompting information includes one or more processors 510 and a memory 520. In FIG. 5, one processor 510 is used as an example.

The device for prompting information may further include an input apparatus 530 and an output apparatus 540.

The processor 510, memory 520, input apparatus 530 and output apparatus 540 may be connected by a bus or other means. FIG. 5 uses connection by a bus as an example.

The input apparatus 530 may receive inputted digital or character information, and the output apparatus 540 may include a display device such as a display screen.

As a computer-readable storage medium, the memory 520 may be used for storing software programs, computer-executable programs, and modules. The processor 510 runs the software programs, instructions and modules stored in the memory 520 to perform function applications and data processing to implement the method in any preceding embodiment.

The memory 520 may include a program storage region and a data storage region, where the program storage region may store an operating system and an application program required by at least one function while the data storage region may store data created depending on use of the device for prompting information. Furthermore, the memory may include a volatile memory like a random access memory, and may further include a non-volatile memory, for example, at least one disk memory, a flash memory or other non-transient solid-state memories.

The memory 520 may be a non-transient computer storage medium or a transient computer storage medium. The non-transient computer storage medium includes, for example, at least one disk memory, a flash memory or other non-transient solid-state memories. In some embodiments, the memory 520 may optionally include memories disposed remote from the processor 510. These remote memories may be connected to the device for prompting information via a network. Examples of the preceding network may include, but are not limited to, the Internet, an intranet, a local area network, a mobile communication network and a combination thereof.

The input apparatus 530 may be used for receiving inputted digital or character information and for generating key signal input related to user settings and function control of the device for prompting information. The output apparatus 540 may include a display device such as a display screen.

The device for prompting information provided in this embodiment may further include a communication apparatus 550 that transmits and/or receives information over a communication network.

It is to be understood by those of ordinary skill in the art that all or part of the procedure steps in the methods of the preceding embodiments may be implemented by related hardware executed via one or more computer programs, these programs may be stored in a non-transient computer-readable storage medium, and during the execution of these programs, the procedure steps in the preceding method embodiments may be implemented. The non-transient computer-readable storage medium may be a magnetic disk, an optical disk, a read-only memory (ROM), a random access memory (RAM), or the like.

### INDUSTRIAL APPLICABILITY

The method and apparatus for prompting information provided in the present disclosure provide a convenient and quick method for a user to learn weather information and bring a better user experience.

## Claims

1. A method for prompting information, applied to a smart device, comprising:
acquiring weather information of a destination within a preset period;
parsing the weather information to obtain a parsing result of the weather information; and
controlling, according to the parsing result, a display component on the smart device to perform displaying according to a first display rule.

2. The method of claim 1, further comprising:
in condition that a control signal sent by a peripheral of the smart device is detected, controlling the display component to perform displaying according to a second display rule, wherein the second display rule is different from the first display rule.

3. The method of claim 2, wherein the controlling the display component to perform displaying according to the second display rule comprises:
controlling the display component to perform displaying in a display mode of a horse racing lamp for a first preset duration; and
after the display component performs displaying in the display mode of the horse racing lamp for the first preset duration, controlling the display component to perform displaying according to a third display rule, wherein the third display rule is different from the first display rule and the second display rule.

4. The method of claim 3, wherein the controlling the display component to perform displaying according to the third display rule comprises: controlling the display component to perform displaying according to the third display rule for a second preset duration; and
wherein the method further comprises: in condition that no control signal sent by the peripheral of the smart device is detected within the second preset duration, controlling the display component on the smart device to perform displaying according to the first display rule.

5. The method of any one of claims 1 to 4, wherein the weather information comprises weather condition information; and
the controlling, according to the parsing result, the display component on the smart device to perform displaying according to the first display rule comprises:
in condition that the weather condition information shows a clear day, controlling the display component on the smart device to emit first color light; or
in condition that the weather condition information shows a rainy day, controlling the display component on the smart device to emit second color light; or
in condition that the weather condition information shows a hazy day, controlling the display component on the smart device to emit third color light.

6. The method of any one of claims 1 to 4, wherein the weather information further comprises weather level information; and
the controlling, according to the parsing result, the display component on the smart device to perform displaying according to the first display rule comprises:
controlling, according to the weather level information, the display component on the smart device to perform displaying in a display mode of a breathing lamp, wherein
in condition that the weather level information shows a strong weather level, the breathing lamp is controlled to breath at a first frequency;
in condition that the weather level information shows a medium weather level, the breathing lamp is controlled to breath at a second frequency; and
in condition that the weather level information shows a weak weather level, the breathing lamp is controlled to breath at a third frequency,
wherein the first frequency, the second frequency and the third frequency are different from each other.

7. The method of any one of claims 1 to 6, wherein the display component is a logo composed of light-emitting diode, LED, lamps.

8. An apparatus for prompting information, applied to a smart device, comprising:
a weather information acquisition module, which is configured to acquire weather information of a destination within a preset period;
a weather information parsing module, which is configured to parse the weather information to obtain a parsing result of the weather information; and
a first control module, which is configured to control, according to the parsing result, a display component on the smart device to perform displaying according to a first display rule.

9. The apparatus of claim 8, further comprising:
a second control module, which is configured to, in condition that a control signal sent by a peripheral of the smart device is detected, control the display component to perform displaying according to a second display rule, wherein the second display rule is different from the first display rule.

10. The apparatus of claim 9, wherein the second control module is further configured to:
control the display component to perform displaying in a display mode of a horse racing lamp for a first preset duration;
and after the display component performs displaying in the display mode of the horse racing lamp for the first preset duration, control the display component to perform displaying according to a third display rule, wherein the third display rule is different from the first display rule and the second display rule.

11. The apparatus of claim 10, wherein the second control module is further configured to:
trigger the first control module in condition that no control signal sent by the peripheral of the smart device is detected within the second preset duration during which the display component is controlled to perform displaying according to the third display rule.

12. The apparatus of any one of claims 8 to 11, wherein the weather information comprises weather condition information; and
wherein the first control module is configured to: in condition that the weather condition information shows a clear day, control the display component on the smart device to emit first color light; or in condition that the weather condition information shows a rainy day, control the display component on the smart device to emit second color light; or in condition that the weather condition information shows a hazy day, control the display component on the smart device to emit third color light.

13. The apparatus of any one of claims 8 to 11, wherein the weather information further comprises weather level information; and
wherein the first control module is configured to: control, according to the weather level information, the display component on the smart device to perform displaying in a display mode of a breathing lamp, wherein in condition that the weather level information shows a strong weather level, the breathing lamp is controlled to breath at a first frequency; in condition that the weather level information shows a medium weather level, the breathing lamp is controlled to breath at a second frequency; and in condition that the weather level information shows a weak weather level, the breathing lamp is controlled to breath at a third frequency, wherein the first frequency, the second frequency and the third frequency are different from each other.

14. The apparatus of any one of claims 8 to 13, wherein the display component is a logo composed of light-emitting diode, LED, lamps.

15. A computer-readable storage medium, which is configured to store computer-executable instructions for executing the method of any one of claims 1 to 7.
